# EUROPÄISCHE PATENTANMELDUNG

(11) **EP 4 446 834 A1**
(43) Veröffentlichungstag der Anmeldung: **16.10.2024**
(21) Anmeldenummer: 24163179.5
(22) Anmeldetag: 13.03.2024
(51) Int. Cl.: G05B 19/404, G05B 19/416

(54) **VERFAHREN ZUM EINSTELLEN EINER BEARBEITUNGSMASCHINE, COMPUTERPROGRAMMPRODUKT UND BEARBEITUNGSMASCHINE**

(30) Priorität: 12.04.2023 DE 102023109245
(71) Anmelder: Reichmann & Sohn GmbH, 89264 Weißenhorn (DE)
(72) Erfinder: Kosmowski, Frank, 87748 Fellheim (DE)
(74) Vertreter: Baur & Weber Patentanwälte PartG mbB

(57) **Zusammenfassung**

Verfahren zum Einstellen einer Bearbeitungsmaschine (1) zum automatischen Bearbeiten, insbesondere Abtrennen von Materialvolumen, eines Werkstücks (33) durch ein maschinengesteuertes Werkzeug (25) der Bearbeitungsmaschine (1) mit den Schritten:
- Fertigen (400) eines Werkstücks (55) mit einer Mehrzahl von Soll-Bearbeitungspunkten (43) zum Bearbeiten, wobei das Fertigen Anfahren der Soll-Bearbeitungspunkte (43) und Bearbeiten des Werkstücks (33) an den Soll-Bearbeitungspunkten (43) mit zumindest einem Werkzeug (25) umfasst,
- Erfassen (500) einer belastungsabhängigen Maschinenbetriebskenngröße (M) beim Fertigen,
- Anpassen (600) eines Fertigungsgeschwindigkeitsprofils (P), mit dem eine Abfolge von Anfahrschritten und Bearbeitungsschritten beim Fertigen durchgeführt wird, in Abhängigkeit von der ermittelten Maschinenbetriebskenngröße (M) für das Fertigen eines weiteren Werkstücks (33).

## Beschreibung

Die Erfindung betrifft ein Verfahren zum Einstellen einer Bearbeitungsmaschine zum automatischen Bearbeiten eines Werkstücks durch ein maschinengesteuertes Werkzeug der Bearbeitungsmaschine. Die Erfindung betrifft außerdem eine solche Bearbeitungsmaschine und ein Computerprogrammprodukt.

Bearbeitungsmaschinen sind ausgebildet zur automatischen Bearbeitung von Werkstücken mit maschinengesteuerten Werkzeugen. Solche Maschinen werden auch als Werkzeugmaschinen bezeichnet. Mittels CNC-basierter Steuerungstechnik werden bei der Fertigung Verfahrbewegungen zwischen dem Werkstück und den Werkzeugen gesteuert, die von der Bearbeitungsmaschine automatisch ausgeführt werden. Ein Einsatzgebiet solch einer Bearbeitungsmaschine ist beispielsweise trennende Fertigung, insbesondere Zerteilen und Spanen von Materialvolumina eines zu bearbeitenden Werkstücks, im Rahmen einer Gussnachbearbeitung. Eine Bearbeitungsmaschine zur automatischen Gussnachbearbeitung automatisiert einen Vorgang, der bei händischer Ausführung mit einem Winkelschleifer schwere körperliche Arbeit ist. Dies erleichtert die Arbeit und ist zeitsparend.

Beim Gussputzen werden Guss-Werkstücke nachbearbeitet, indem über eine Soll-Werkstückform hinausragende, vom Gussvorgang herrührende Materialvolumina zumindest teilweise entfernt werden. Dies betrifft Grate als beim Gussvorgang entstandene Kanten, Auffaserungen oder Splitter, die entfernt oder reduziert werden sollen, und Angusssysteme zur Zuführung des Gussmaterials zur Form, die abgetrennt werden sollen. Weitere Materialabtrennung kann im Rahmen der Gussnachbearbeitung vorgesehen sein, beispielsweise durch Glätten einer Fläche des Werkstücks. Nach der Gussnachbearbeitung werden üblicherweise weitere Materialabtrennungen in einem nachfolgenden Schritt durchgeführt, um eine gewünschte Zwischen- oder Endform des Werkstücks auszubilden.

Bei der Fertigung in der Bearbeitungsmaschine wird für die Werkstücke eine Werkzeugbahn mit Soll-Bearbeitungspunkten zum Bearbeiten vorgegeben. Das Fertigen umfasst das Anfahren der Soll-Bearbeitungspunkte durch die Bearbeitungsmaschine und die Bearbeitung des Werkstücks an den Soll-Bearbeitungspunkten.

Die Soll-Bearbeitungspunkte der Werkzeugbahn können erfasst werden, indem ein Maschinenprogrammierer sie vorgibt. Dies kann beispielsweise mit einem Fernsteuergerät und einem fertigen Werkstück, dessen Soll-Bearbeitungspunkte durch Materialabtrennung bereits bearbeitet wurden, erfolgen. Der Maschinenprogrammierer gibt mit dem Fernsteuergerät vor, wie die Bearbeitungsmaschine mit dem Werkzeug die Soll-Bearbeitungspunkte entlang der Werkzeugbahn anfahren und bearbeiten soll. Die erfasste und in der Bearbeitungsmaschine als Bearbeitungsprogramm gespeicherte Werkzeugbahn mit den Soll-Bearbeitungspunkten ist Basis für die automatische Fertigung weiterer Werkstücke.

Nach diesem vom Maschinenprogrammierer vorgenommenen Einstellvorgang, der auch als Teaching bezeichnet wird, fährt bei der anschließenden Fertigung weiterer Werkstücke die Bearbeitungsmaschine die Soll-Bearbeitungspunkte entlang der Werkzeugbahn an und führt die vorgegebenen Bearbeitungen durch.

Es stellt sich die Aufgabe, den Einstellvorgang zu verbessern, um so beim späteren Fertigungsvorgang die Fertigungsgeschwindigkeit und damit die Produktivität zu steigern.

Die Aufgabe wird durch ein Verfahren zum Einstellen einer Bearbeitungsmaschine zum automatischen Bearbeiten, insbesondere Abtrennen von Materialvolumen, eines Werkstücks durch ein maschinengesteuertes Werkzeug der Bearbeitungsmaschine gelöst.

Das Verfahren sieht vor, das Werkstück mit einer Mehrzahl von Soll-Bearbeitungspunkten zum Bearbeiten zu fertigen, wobei das Fertigen Anfahren der Soll-Bearbeitungspunkte und Bearbeiten des Werkstücks an den Soll-Bearbeitungspunkten mit zumindest einem Werkzeug umfasst. Beim Fertigen wird eine belastungsabhängige Maschinenbetriebskenngröße erfasst. Ein Fertigungsgeschwindigkeitsprofil, mit dem eine Abfolge der Anfahrschritte und Bearbeitungsschritte beim Fertigen durchgeführt wird, wird in Abhängigkeit von der ermittelten Maschinenbetriebskenngröße für das Fertigen zumindest eines weiteren Werkstücks angepasst.

Das Verfahren nutzt Optimierungspotenzial bei den Anfahr- und Bearbeitungsschritten für die vom Maschinenprogrammierer vorgegebenen Soll-Bearbeitungspunkte. Die Strategie der Vorgabe der Verfahrbewegungen unterliegt dem Maschinenprogrammierer und kann sehr individuell sein.

Das Fertigungsgeschwindigkeitsprofil umfasst Geschwindigkeitsinformation und vorteilhafterweise auch Beschleunigungsinformation zu den Verfahrbewegungen bei Anfahr- und Bearbeitungsschritten. Bei der Optimierung werden die Geschwindigkeiten und vorteilhafterweise auch die Beschleunigungen angepasst.

Durch das vom Verfahren angepasste Fertigungsgeschwindigkeitsprofil für die Anfahr- und Bearbeitungsbewegungen wird die Fertigungszeit optimiert. Optimierungspotenziale sind bei konventionellem Teaching, das den Eingaben des Maschinenprogrammierers folgt, weder genutzt noch erkannt worden.

Beim Fertigungsschritt des Verfahrens werden die vorgegebenen Soll-Bearbeitungspunkte und das Werkstück an den Soll-Bearbeitungspunkten bearbeitet. Vorzugsweise erfolgt die Bearbeitung entlang einer Werkzeugbahn mit den Soll-Bearbeitungspunkten. Die Werkzeugbahn gibt die Reihenfolge der zu bearbeitenden Soll-Bearbeitungspunkte vor. Ein Soll-Bearbeitungspunkt ist ein konzentrierter oder ausgedehnter Bereich, an dem eine Bearbeitung erfolgen soll, beispielsweise das Abtrennen eines Angusssystems oder das Entfernen eines Grads. Die Soll-Bearbeitungspunkte sind Bereiche, an denen das Werkstück durch Materialabtrennung, wenn erforderlich, bearbeitet wird, sodass das Materialvolumen an den Soll-Bearbeitungspunkten nicht über eine vorgegebene Soll-Werkstückform an den Soll-Bearbeitungspunkten hinausragt. Die Soll-Werkstückform stimmt üblicherweise nicht mit einer Endform überein und wird durch das Werkstück auch nicht ganz ausgefüllt. Sie definiert vielmehr die Grenzen des Werkstücks, über die nach dem Fertigen kein Material mehr hinausragen soll und damit den Umfang, inwiefern Materialvolumen beim Fertigungsschritt abgetragen werden soll. So kommt es beim Entfernen von Graten an einem Soll-Bearbeitungspunkt nicht zu einer Materialabtrennung, wenn kein Materialvolumen über die Soll-Werkstückform am Soll-Bearbeitungspunkt ragt.

Die Maschinenbetriebskenngröße gibt in einer Ausführung eine Last der Bearbeitungsmaschine, insbesondere beim Bearbeiten an. Diese Kenngröße ist ein Maß, ob oder inwiefern die Bearbeitungsmaschine in einem Lastgrenzbereich arbeitet. In einer Ausführung ist die Maschinenbetriebskenngröße eine Kenngröße eines Antriebs des Werkzeugs. Dies kann ein Motorstrom als lastabhängige Stromaufnahme des Antriebs sein. Der Lastgrenzbereich entspricht in diesem Fall einem maximalen Motorstrom. Die Last und damit der Motorstrom als Maschinenbetriebskenngröße steigt mit zunehmendem Materialabtrag, sodass die maximale Geschwindigkeit, mit dem das Werkstück relativ zum Werkzeug im Lastgrenzbereich verfahren werden kann, mit zunehmendem Materialabtrag sinkt.

Beim Anpassen wird die Geschwindigkeit, mit der die Anfahrschritte und Bearbeitungsschritte beim Fertigen durchgeführt werden, optimiert. Anfahrschritte umfassen Freifahrbewegungen, auch als Zustellbewegungen bezeichnet, um Werkzeug und Werkstück an den Soll-Bearbeitungspunkten einander zuzuführen und zueinander auszurichten, ohne dass es zum Kontakt kommt oder eine Bearbeitung erfolgt. Bearbeitungsschritte umfassen Bearbeitungsbewegungen, bei denen das Werkstück bearbeitet wird und ein Materialabtrag erfolgt oder zu erwarten ist.

Bearbeitungsschritte sehen den Werkzeugkontakt zur Materialabtrennung vor. Nichtsdestotrotz können auch Bearbeitungsschritte als Sicherheitspuffer Bewegungsabschnitte ohne Kontakt zwischen Werkstück und Werkzeug umfassen, beispielsweise unmittelbar vor und nach dem eigentlichen Kontakt. Für die Bewegungen der Anfahrschritte und der Bearbeitungsschritte werden üblicherweise verschiedene Geschwindigkeiten verwendet. Die Geschwindigkeit beim Anfahren ist höher.

Die Optimierung der Geschwindigkeit kann für jeden der Schritte separat erfolgen und/oder für eine ganze Gruppe von Schritten erfolgen. So können die Anfahrschritte beispielsweise mit derselben, maximalen Freifahrgeschwindigkeit durchgeführt werden. Dagegen sind die Geschwindigkeiten bei den Bearbeitungsschritten lastabhängig für jeden der Bearbeitungsschritte optimiert worden. Die Geschwindigkeit innerhalb eines Schrittes ist ebenfalls veränderbar.

Die Anpassung ist ein Optimierungsschritt, um die Bearbeitungsmaschine insbesondere bei den Bearbeitungsschritten besser auszulasten und vorzugsweise im Lastgrenzbereich zu betreiben. Dies geht mit einer schnelleren Bearbeitung und Fertigung einher. Der Lastgrenzbereich bei der Bearbeitung ergibt sich aus der Konstruktion der Bearbeitungsmaschine, insbesondere ihres Antriebs. Üblicherweise ist er jedoch so gewählt, dass durch einen Lastpuffer auch bei kurzzeitigem Überschreiten des Lastgrenzbereichs ein sicherer Betrieb noch möglich ist.

Bei der Anpassung wird die Maschinenbetriebskenngröße zur Analyse des Bewegungsmusters bei der Fertigung und insbesondere bei der Bearbeitung und der damit verbundenen Werkzeugbelastung genutzt. Auf Grund beispielsweise der Stromaufnahme einer Werkzeugspindel als Antrieb können Optimierungspotenziale identifiziert und genutzt werden. Das Anpassen kann Optimierung von Bewegungsgeschwindigkeiten und -beschleunigungen sowie die Veränderungen der Bewegungen umfassen.

In einer vorteilhaften Ausführung wird das Fertigen, Erfassen und Anpassen während des Einstellvorgangs mit weiteren Werkstücken durchgeführt, um die Bearbeitungsgeschwindigkeit schrittweise zu optimieren, indem nach jedem Fertigungsschritt eine Anpassung erfolgt. Alternativ werden Fertigen und Erfassen während des Einstellvorgangs mit einem Satz von Werkstücken durchgeführt, sodass beim anschließenden Anpassen das Fertigungsgeschwindigkeitsprofil auf Basis eines Satzes von mehreren erfassten Maschinenkenngrößen erfolgt.

Grate von Guss-Werkstücken können sich von Werkstück zu Werkstück unterscheiden, sodass das Einstellen der Bearbeitungsmaschine durch das Fertigen mehrerer Guss-Werkstücke, in Abhängigkeit derer die Anpassung erfolgt, eine Anpassung für einen breiten Formenschatz von Guss-Werkstücken erlaubt. Das resultierende Fertigungsgeschwindigkeitsprofils ist für einen breiten Formenschatz von Guss-Werkstücken geeignet und ermöglicht dennoch eine schnellere Fertigung.

Vorteilhafterweise erfolgt eine Lagebestimmung der Soll-Bearbeitungspunkte des Werkstücks vor dem Fertigen. Anhand der Lagebestimmung kann die Ausrichtung des Werkstücks auf einer Werkstückaufnahme bestimmt werden und die Soll-Bearbeitungspunkte können in vorgegebener Weise bearbeitet werden, ohne dass es zu einem Versatz auf Grund einer Lageabweichung des Werkstücks kommt. Solch eine Lagebestimmung kann mit einer geeigneten Messvorrichtung erfolgen, die beispielsweise vorgegebene Referenzpunkte, die eine vorgegebene Lage zu den Soll-Bearbeitungspunkten haben, identifiziert und deren Lage erfasst. Solch ein Referenzpunkt kann beispielsweise eine Erhebung am Werkstücks sein. Die Lagebestimmung kann optional vor weiteren oder allen Bearbeitungsschritten bei der Fertigung erfolgen, um die Genauigkeit der Fertigung zu erhöhen.

Das Fertigen umfasst in einer Ausführung eine Bewegungsabfolge mit zumindest einer Bewegung einer Werkstückaufnahme, auf der das Werkstück eingespannt ist, mit dem Werkstück und/oder mit zumindest einer Bewegung des zumindest einen Werkzeugs. Die Bewegungen von Werkstückaufnahme und Werkzeug können zeitversetzt und/oder gleichzeitig erfolgen. Die Bewegungsabfolge umfasst Anfahrabschnitte, in denen keine Bearbeitung vorgesehen ist, und Bearbeitungsabschnitte, in denen Bearbeiten vorgesehen ist oder sein kann.

Die Anfahrabschnitte umfassen Freifahrbewegungen, bei denen keine Bearbeitung vorgesehen ist. Nichtsdestotrotz kann es zu einer Kollision von Werkstück und Werkzeug kommen. Bei Detektion solch einer Kollision wird eine Wegfahrbewegung oder eine starke Geschwindigkeitsreduktion initiiert. Die Detektion erfolgt beispielsweise dadurch, dass die Maschinenbetriebskenngröße einen Schwellwert überschreitet. In gleicher Weise kann bei der Bearbeitung vorgegangen werden, wenn der Lastgrenzbereich überschritten wird.

Das optionale Vorsehen der Bearbeitung im Bearbeitungsabschnitt meint, dass die Bearbeitungsgeschwindigkeit und -beschleunigung so gewählt ist, dass sie für eine Bearbeitung, insbesondere eine Materialabtrennung geeignet ist. Mit anderen Worten: Die Materialabtrennung am Soll-Bearbeitungspunkt erfolgt nur, wenn überschüssiges Materialvolumen vorhanden ist. Wenn kein überschüssiges Materialvolumen vorhanden ist, erfolgt keine Materialabtrennung. Bei einem Bearbeitungsschritt sind Bewegungen mit reduzierter Geschwindigkeit im Vergleich zur Freifahrbewegung während des Heranfahrens an das Werkstück und des Wegfahrens vom Werkstück unmittelbar vor und nach dem Kontakt zweckmäßig, um Sicherheitsreserven für ausladende Materialvolumina zu haben. Auch wenn während des Bearbeitungsschritts mehrteilige Materialvolumina entfernt werden, ist die reduzierter Geschwindigkeit während des gesamten Bearbeitungsschritts zweckmäßig.

Das Fertigungsgeschwindigkeitsprofil für die Bewegungsabfolge, mit denen die Anfahrschritte und Bearbeitungsschritte beim Fertigen durchgeführt werden, wird beim Anpassungsschritt zumindest abschnittsweise für jeden Abschnitt oder für Gruppen von Abschnitten optimiert. So kann beispielsweise jeder Bearbeitungsabschnitt einzeln optimiert werden und die Anfahrabschnitte werden zusammen und in gleicher Weise optimiert oder behalten eine vorgegebene Anfahrgeschwindigkeit bei.

Beim Anpassen kann eine Zuordnung von Anfahrabschnitten oder Bearbeitungsabschnitten innerhalb der Bewegungsabfolge verändert werden. So werden innerhalb eines Bearbeitungsabschnitts Teilabschnitte detektiert, bei denen es nicht zum Werkzeugkontakt kommt, und sie werden dann als Anfahrbewegung eingestuft und mit höherer Geschwindigkeit durchgeführt. Diese veränderte Zuordnung ermöglicht eine optimierte Umschaltung zwischen Bewegungen mit und ohne Bearbeitung und daran angepasste Geschwindigkeiten. Das Erkennen eines Anfahrabschnitts, indem keine Bearbeitung erfolgt, innerhalb eines Bearbeitungsschritts, in dem die Bewegung mit geringer Geschwindigkeit erfolgt, ermöglicht eine Bewegung mit höherer Freifahrgeschwindigkeit im erkannten Anfahrabschnitt und damit die Erhöhung der Fertigungsgeschwindigkeit. Auch lange Anfangs- und Endabschnitte eines Bearbeitungsschritts, an denen es nicht zum Kontakt von Werkstück und Werkzeug kommt, können möglicherweise zumindest teilweise mit höherer Geschwindigkeit durchgeführt werden.

Vorteilhafterweise werden die Bewegungen innerhalb eines Anfahrabschnitts oder eines Bearbeitungsabschnitts in mehrere Teilabschnitte unterteilt, die teilabschnittsweise optimiert werden. So können Beschleunigungen in Anfangs- und Endabschnitten optimiert werden.

Vorteilhafterweise hängt das Fertigungsgeschwindigkeitsprofil von einem abzutragenden Materialvolumen ab. Die Geschwindigkeit ist bei größerem Materialabtrag geringer, da die Last ansteigt. Das abzutrennende Materialvolumen kann indirekt durch die Maschinenbelastungskenngröße detektiert werden.

In einer Ausführung hängt die Geschwindigkeit und/oder die Beschleunigung, mit der das Werkstück bewegt wird, von dessen Masse ab. Eine kleinere Masse erlaubt eine größere Beschleunigung.

Die Werkzeugbahn mit der Mehrzahl von Soll-Bearbeitungspunkten zum Nachbearbeiten wird in einer Ausführung erfasst, indem die durch eine Mensch-Maschine-Schnittstelle angesteuerten Soll-Bearbeitungspunkte erfasst werden. Bei dieser Art der Vorgabe kann der Maschinenprogrammierer die Verfahrbewegungen der Bearbeitungsmaschine fernsteuern und die Soll-Bearbeitungspunkte eines bereits bearbeiteten Werkstücks anfahren.

Im oben beschriebenen Einstellbetrieb wird das Fertigungsgeschwindigkeitsprofil angepasst und optimiert. Dieses Einstellen kann auch als Teaching bezeichnet werden. In einem anschließenden Fertigungsbetrieb erfolgt das Fertigen von weiteren Werkstücken mit dem angepasstem Fertigungsgeschwindigkeitsprofil, ohne dass das Fertigungsgeschwindigkeitsprofil weiter angepasst wird.

Ein Computerprogrammprodukt ist ebenfalls für das oben beschriebene Einstellen geeignet. Das Computerprogrammprodukt umfasst Befehle in einem Programm, die bei der Ausführung des Programms durch einen Computer diesen veranlassen, das oben beschriebene Verfahren mit einer Bearbeitungsmaschine auszuführen. Solch ein Computer kann von der Steuervorrichtung der Bearbeitungsmaschine umfasst sein. Das Computerprogrammprodukt ist eine Softwarelösung, die Optimierungspotenziale erkennt und analysiert, um so selbstständig Geschwindigkeiten und Beschleunigungen bei der Fertigung zu optimieren oder Veränderungsansätze optimierter Bewegungen zu präsentieren.

Die Bearbeitungsmaschine ist ausgebildet, das oben beschriebene Verfahren auszuführen. Die Bearbeitungsmaschine ist zum automatischen Bearbeiten, insbesondere Abtragen von Materialvolumen, eines Werkstücks durch ein maschinengesteuertes Werkzeug vorgesehen. Die Bearbeitungsmaschine umfasst eine bewegliche Werkstückaufnahme, auf der ein zu bearbeitendes Werkstück einspannbar ist, zumindest ein bewegliches maschinengesteuertes Werkzeug und einen Maschinenbetriebskenngrößensensor, der ausgebildet ist, eine belastungsabhängige Maschinenbetriebskenngröße zu erfassen. In einer Speichervorrichtung der Bearbeitungsmaschine ist eine Mehrzahl von Soll-Bearbeitungspunkten zum Bearbeiten und ein Fertigungsgeschwindigkeitsprofil, mit dem eine Abfolge von Anfahrschritten und Bearbeitungsschritten beim Fertigen durchgeführt wird, speicherbar. Eine Steuervorrichtung ist mit der Speichervorrichtung und dem Maschinenbetriebskenngrößensensor gekoppelt und ausgebildet, die Bewegung des Werkzeug und/oder der Werkstückaufnahme so zu steuern, dass zur Bearbeitung des Werkstücks die Soll-Bearbeitungspunkte angefahren werden und das Werkstück an den Soll-Bearbeitungspunkten mit dem zumindest einen Werkzeug bearbeitet wird, wobei die belastungsabhängigen Maschinenbetriebskenngröße beim Fertigen erfasst wird. Die Steuervorrichtung ist ferner ausgebildet, das Fertigungsgeschwindigkeitsprofil anzupassen und zu speichern.

Die Bearbeitungsmaschine kann das zuvor beschriebene Verfahren ausführen.

Die Optimierung der Einstellung erfolgt softwarebasiert in Abhängigkeit der Maschinenbetriebskenngröße, sodass die Last insbesondere beim Bearbeiten optimiert wird. Vorteilhafterweise ist eine Lagedetektionsvorrichtung vorgesehen, um die Lage des Werkstücks, beispielsweise mittels eines Lasers, zu detektieren. Auch ein Gewichtssensor kann vorgesehen sein, um die Masse des Werkstücks zu detektieren und in Abhängigkeit dessen Geschwindigkeit und/oder Beschleunigung anzupassen.

Nachfolgend werden einige Ausführungsbeispiele anhand der Zeichnung näher erläutert. Es zeigen:
- Fig. 1: eine dreidimensionale schematische Darstellung eines Ausführungsbeispiels einer Bearbeitungsmaschine zum automatischen Bearbeiten von Werkstücken,
- Fig. 2: eine dreidimensionale Ansicht aus einem Bearbeitungskammerinneren der Bearbeitungsmaschine,
- Fig. 3: ein Flussdiagramm eines Verfahrensbeispiels,
- Fig. 4: ein Flussdiagramm eines weiteren Verfahrensbeispiels,
- Fig. 5: beispielhafte Fertigungsgeschwindigkeitsprofile und Maschinenbetriebskenngrößenverläufe, und
- Fig. 6: weitere beispielhafte Fertigungsgeschwindigkeitsprofile und Maschinenbetriebskenngrößenverläufe.

In den Figuren sind gleiche oder funktional gleichwirkende Komponenten mit den gleichen Bezugszeichen versehen.

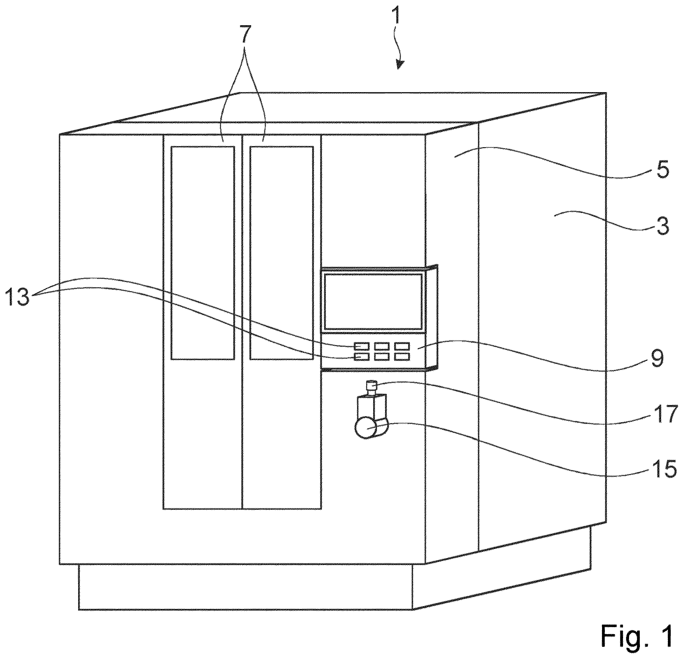

Fig. 1 zeigt eine dreidimensionale schematische Darstellung eines Ausführungsbeispiels einer Bearbeitungsmaschine 1 zum automatischen Bearbeiten von Werkstücken. Die Bearbeitungsmaschine 1 ist in diesem Ausführungsbeispiel zur Gussnachbearbeitung ausgebildet, die Materialabtrennen von Graten und Angusssystem umfasst. Materialvolumen kann beim Trennen durch Zerteilen oder Spanen abgetrennt werden. Zerteilen ist das Teilen eines Körpers in mehrere Teile, wie es beispielsweise beim Abtrennen eines Angusssystems als Ganzes vom Werkstück erfolgt. Spanen ist das Abtrennen in Form von Spänen, beispielsweise beim Fräsen oder Schleifen von Graten.

Die Bearbeitungsmaschine 1 umfasst eine Bearbeitungskammer 3, in der maschinenangetriebene und automatisch angesteuerte Werkzeuge 25 angeordnet sind, mit denen das Werkstück 33, angeordnet auf einer Werkstückaufnahme 25 einer Werkstückzuführung 19, bearbeitet wird. In der Bearbeitungskammer 3 erfolgt die Fertigung mit mehreren Bearbeitungsschritten. Mittels CNC-basierter Steuerungstechnik werden bei der Fertigung Verfahrbewegungen zwischen dem Werkstück und den Werkzeugen gesteuert, die von der Bearbeitungsmaschine automatisch ausgeführt werden.

Benachbart zur Bearbeitungskammer 3 ist ein von außen zugänglicher Rüstbereich 5 angeordnet, der in diesem Ausführungsbeispiel durch Türen 7 verschließbar ist. Zwischen dem Rüstbereich 5 und der Bearbeitungskammer 3 ist eine Klappe (in Fig. 1 nicht dargestellt). Im Fertigungsbetrieb, in dem die Bearbeitung des Werkstücks in der Bearbeitungskammer 3 erfolgt, ist die Klappe geschlossen und die Bearbeitungskammer 3 nicht zugänglich. Der Rüstbereich 5 kann zugänglich sein. Ein zu bearbeitendes Werkstück 33 kann im Rüstbereich 5 der Bearbeitungsmaschine 1 platziert und für die Fertigung bereitgestellt werden sowie nach der Fertigung anschließend wieder von dort entnommen werden Währenddessen ist die Klappe geschlossen. Bei geschlossenen Türen 7 wird das Werkstück 33 aus dem Rüstbereich 5 automatisch durch die geöffnete Klappe in die Bearbeitungskammer 3 bewegt. Nach der Bearbeitung in der Bearbeitungskammer 3 wird es, ebenfalls bei geschlossenen Türen 7, wieder zurückbewegt. Die geschlossenen Türen 7 verhindern Zugriff auf das Werkstück 33 während des Transfers und auf sich bewegende Teile im Bearbeitungsmaschineninneren, um Unfälle zu verhüten. Alternative Maßnahmen zur Unfallverhütung sind beispielsweise Lichtschranken bei einem stets offenen Rüstbereich 5.

Außenseitig der Bearbeitungsmaschine 1 ist eine Steuervorrichtung 9 angeordnet, die den Betrieb der Werkzeuge 25 in der Bearbeitungsmaschine 1 und die Bewegungen des Werkstücks 33 bei der Fertigung steuert. Die Steuervorrichtung 9 umfasst eine Eingabevorrichtung, beispielsweise Bildschirm 11 und Bedientasten 13, wie dargestellt. Eine alternative Eingabevorrichtung ist ein Tabletcomputer, der über eine Schnittstelle mit der Steuervorrichtung 9 kommuniziert. Über die Eingabevorrichtung als Mensch-Maschine-Schnittstelle erfolgt die Programmierung der Bearbeitungsmaschine 1, in der die automatisierte Fertigung mit den Bearbeitungsschritten für das Werkstück 33 vorgegeben wird.

Ein Starttaster 15 und ein Notaustaster 17 sind außenseitig an der Bearbeitungsmaschine 1 angebracht, um den Werkstücktransfer und die Fertigung zu starten beziehungsweise sofort zu unterbrechen.

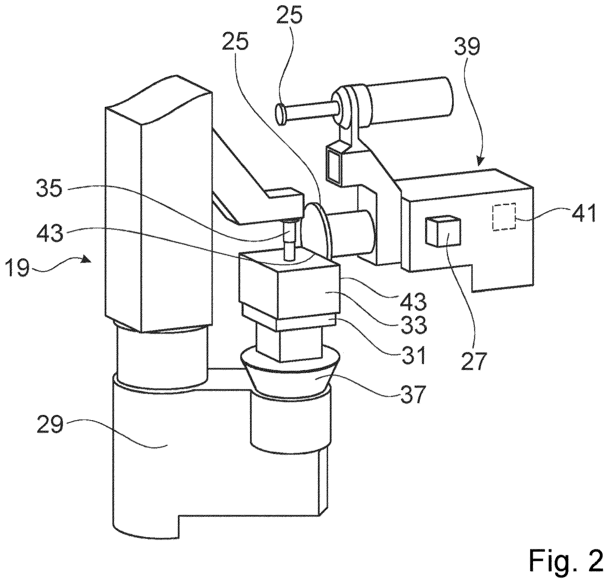

Fig. 2 zeigt eine dreidimensionale Ansicht aus dem Bearbeitungskammerinneren umfassend eine Werkstückzuführung 19 und eine Werkzeugzuführung 39 mit Werkzeugen 25.

Die Werkstückzuführung 19 umfasst einen beweglichen Arm 29 und eine relativ zum Arm 29 bewegliche Werkstückaufnahme 31. Sie ist ausgebildet, um ein Werkstück 33 zu halten. Das Werkstück 33 ist zwischen die Werkstückaufnahme 31 und ein von oben herabfahrbares Spannelement 35 der Werkstückzuführung 19 einspannbar, um es in seiner Position auf der Werkstückaufnahme 31 zu halten. Mit der Werkstückzuführung 19 kann das Werkstück 33 im Bearbeitungskammerinneren und relativ zum Werkzeug 25 bewegt werden. Die Werkstückaufnahme 31 und das Spannelement 35 sind in einer Ebene beweglich, höhenverstellbar und drehbar. Letzteres wird durch einen Drehtisch 37 erreicht, der die Werkstückaufnahme 31 um eine durch das Spannelement 35 laufende Achse dreht. Auch eine Schwenkbewegung kann in einem Ausführungsbeispiel möglich sein, durch welche die Werkstückaufnahme 31 verkippt wird. Das Werkstück 33 kann durch die beschriebenen Bewegungen des beweglichen Arms 29 mit der Werkstückaufnahme 31 oder durch die Bewegung der Werkstückaufnahme 31 relativ zum Arm 29 bewegt werden.

Die Werkzeugzuführung 39 umfasst zumindest eine Werkzeugspindel als Antrieb für das Werkzeug 25. Die Werkzeugspindel ist zur Aufnahme des Werkzeugs 25 ausgebildet und wird von einem Motor, insbesondere einem Elektromotor, angetrieben. In diesem Ausführungsbeispiel sind zwei Werkzeugspindeln vorgesehen. Ein Werkzeug 25 ist eine Schleifscheibe; das andere Werkzeug 25 ist eine Schleiftrommel. Die Werkzeuge 5 sind ebenfalls beweglich angeordnet und können in einer Ebene bewegt werden, in der Höhe verstellt werden sowie geschwenkt und gedreht werden. In diesem Ausführungsbeispiel ist im Wesentlichen die rotierende Schleifscheibe als Werkzeug 25 zur Materialabtrennung und zum Zertrennen für die Gussnachbearbeitung vorgesehen. Ein Motorstrom als Stromaufnahme des Elektromotors zum Antrieb des Werkzeugs 25 wird durch einen Maschinenbetriebsgrößensensor 41 detektiert.

Die Bewegungen der Werkzeugaufnahme 39 und des Werkzeugs 25 sowie der Betrieb der antreibenden Spindeln wird von der Steuervorrichtung 9 gesteuert, um die Bearbeitung des Werkstücks 33 mit einem oder mehreren Werkzeugen 25 an Soll-Bearbeitungspunkten 43 des Werkstücks 33 durchzuführen. Ein beispielhafter Soll-Bearbeitungspunkt 43 ist eine zu entgratende Kante des Werkstücks 33. Exemplarisch sind in Fig. 2 zwei Kanten mit dem Bezugszeichen 43 versehen. Zur Bearbeitung werden das Werkzeug 25 und das Werkstück 33 relativ zueinander verfahren, um dadurch den gewünschten Materialabtrag zu erzielen. Dies wird durch Bewegungen der Werkstückaufnahme 31 und/oder des Werkzeugs 25 erreicht.

Eine Lagedetektionsvorrichtung ist vorgesehen, um die Lage der Soll-Bearbeitungspunkte 43 zu detektieren, sodass das Werkstück 33 und das Werkzeug 25 für die Bearbeitung in vorgegebener Weise zueinander ausgerichtet werden können und die Bearbeitung an den Soll-Bearbeitungspunkten 43 in vorgegebener Weise ohne Versatz erfolgen kann. Eine Messvorrichtung 27 ist ausgebildet, die Position und die Lage der Soll-Bearbeitungspunkte 43 und von vorgegebenen Referenzpunkten, anhand derer die Lage der Soll-Bearbeitungspunkte 43 bestimmbar ist, zu erfassen. Dies kann beispielsweise mittels eines Lasers erfolgen. Anhand der erfassten Position kann die Ausrichtung von Werkstück 33 und Werkzeug 25 zueinander bestimmt werden und ermöglicht ein genaues Anfahren der Soll-Bearbeitungspunkte 43 und deren gewünschte Bearbeitung.

Der Transport in die Bearbeitungskammer 3, die Fertigung mit den Bearbeitungsschritten zur Materialentfernung und der Transport des Werkstücks 33 aus der Bearbeitungskammer 3 erfolgen automatisch. Für die automatische Fertigung ist ein Bearbeitungsprogramm zur automatischen Steuerung der Bearbeitungsmaschine 1 in der Steuervorrichtung 9 gespeichert.

Das Fertigen eines Werkstücks 33, das in diesem Ausführungsbeispiel ein Guss-Werkstück ist, erfolgt, indem entlang einer Werkzeugbahn mit einer Mehrzahl von Soll-Bearbeitungspunkten 43 zum Bearbeiten die Soll-Bearbeitungspunkte 43 angefahren werden und das Werkstück an den Soll-Bearbeitungspunkten 43 mit zumindest einem Werkzeug 25 bearbeitet wird. Bei der Bearbeitung wird über eine vorgegebene Soll-Werkstückform an den Soll-Bearbeitungspunkten 43 überstehendes Materialvolumen entfernt. Dies betrifft beispielsweise das Abtrennen von Angusssystemen und das Abschleifen oder Abtrennen von Graten.

Für die maschinelle Bearbeitung mehrerer Werkstücke 33 im Fertigungsbetrieb wird die Bearbeitungsmaschine 1 wie zuvor bereits erwähnt eingestellt. In diesem Einstellbetrieb wird zunächst eine Werkzeugbahn mit einer Mehrzahl von Soll-Bearbeitungspunkten 43 zum Bearbeiten und die Art der Bearbeitung für die Werkstücke 33 vorgegeben.

Die Werkzeugbahn mit den Soll-Bearbeitungspunkten 43 kann erfasst werden, indem ein Maschinenprogrammierer das Anfahren und Bearbeiten der Bearbeitungsmaschine 1 vorgibt. Dies kann beispielsweise mit einem Fernsteuergerät und einem fertigen Werkstück 33, dessen Soll-Bearbeitungspunkte 43 bereits bearbeitet wurden, erfolgen. Der Maschinenprogrammierer gibt mit dem Fernsteuergerät vor, wie die Bearbeitungsmaschine 1 die Soll-Bearbeitungspunkte 43 entlang der Werkzeugbahn anfährt, indem Werkstück 33 und Werkzeug 25 an den Soll-Bearbeitungspunkten 43 zueinander bewegt werden, sodass der gewünschte Materialabtrag erreicht würde. Zu diesem Zweck kann im Einstellbetrieb die Bearbeitungskammer 3 zugänglich sein, damit der Maschinenprogrammierer die Bewegungen von Werkstück 33 und Werkzeug 25 sehen kann. Die Soll-Bearbeitungspunkte 43 werden gekennzeichnet, sodass sie von der Bearbeitungsmaschine 1 erfasst und ins Bearbeitungsprogramm übernommen werden. Die Bearbeitung beschreibende Kenngrößen, beispielsweise Werkzeuggeschwindigkeit am Soll-Bearbeitungspunkt 43, werden erfasst oder durch den Maschinenprogrammierer vorgegeben und ins Bearbeitungsprogramm übernommen. Es werden Bearbeitungsbewegungen bei der Bearbeitung und Freifahrbewegungen beim Anfahren unterschieden, die üblicherweise verschiedene Vorschubgeschwindigkeiten haben. Auch Referenzpunkte, anhand der die Ausrichtung des Werkstücks 33 feststellbar ist, können durch den Maschinenprogrammierer gekennzeichnet und erfasst werden. Andere Eingabemöglichkeiten für die relevanten Informationen des Bearbeitungsprogramms, beispielsweise als Datei, sind denkbar.

Die erfasste und in der Bearbeitungsmaschine 1 gespeicherte Werkzeugbahn mit den Soll-Bearbeitungspunkten 43 und ein vorgegebenes Fertigungsgeschwindigkeitsprofil P sind Basis für die weitere Optimierung des Bearbeitungsprogramms der Bearbeitungsmaschine 1. Das Bearbeitungsprogramm umfasst die Abfolge der Soll-Bearbeitungspunkte 43, die durch lineare und/oder zirkulare Bewegungen der Werkzeugaufnahme 31 und/oder des Werkzeugs 33 angefahren beziehungsweise bearbeitet werden. Die Geschwindigkeiten und Beschleunigungen für die Bewegungen werden vom Fertigungsgeschwindigkeitsprofil P umfasst und vorgegeben. Das Fertigungsgeschwindigkeitsprofil P für die vom Maschinenprogrammierer vorgegebene Fertigung kann beispielsweise zwei konstante Geschwindigkeit einerseits für die Anfahrschritte und anderseits für die Bearbeitungsschritte vorsehen.

Das Verfahren des Werkzeugs 25 relativ zum Werkstück 33 kann durch Bewegung der Werkstückaufnahme 31 mit dem Werkstück 33 oder durch Bewegung des Werkzeugs 25 erfolgen. Die Bewegungen der Werkstückaufnahme 31 und des Werkzeugs 25 können nacheinander und/oder gleichzeitig erfolgen. Es werden Freifahrbewegungen, auch als Anfahrbewegungen oder Zustellbewegungen bezeichnet, bei denen keine Materialentfernung vorgesehen ist, von Bearbeitungsbewegungen, bei denen eine Materialentfernung vorgesehen ist, unterschieden. Bei Freifahrbewegungen und Bearbeitungsbewegungen werden üblicherweise unterschiedliche Vorschubgeschwindigkeiten verwendet.

Die Strategie bei der Festlegung der Werkzeugbahn obliegt dem Maschinenprogrammierer und kann deshalb in der Praxis sehr individuell sein. Allerdings gibt es üblicherweise Optimierungspotenzial hinsichtlich der Fertigungszeit.

Optimierungspotenzial bietet zum Beispiel das korrekte Umschalten zwischen Freifahr- und Bearbeitungsbewegungen, das heißt Bewegungen ohne beziehungsweise mit Bearbeitung. Das Anpassen der Bearbeitungsgeschwindigkeit an das abzutragende Materialvolumen kann ebenfalls zur Optimierung genutzt werden. Das Erkennen von Bearbeitungsunterbrechungen bei Trennsituationen bittet ebenso wie die Unterteilung einer Verfahrbewegung in Einzelpositionen mit optimiertem Geschwindigkeitsprofil Optimierungspotenzial. Die Beeinflussung der Bearbeitungsmaschinendynamik in Abhängigkeit von der Werkstückmasse kann auch zur Optimierung genutzt werden. Eine geringe Masse kann stärker beschleunigt werden als eine große Masse. All diese Möglichkeiten dienen dem Ziel die Fertigungszeit des Werkstücks 33 zu verkürzen und damit die Produktivität zu steigern.

Um die Fertigungszeit für das Werkstück 33 zu optimieren, werden oben genannte Optimierungspotenziale anhand einer Maschinenbetriebskenngröße M detektiert. In diesem Ausführungsbeispiel wird zu diesem Zweck der Motorstrom, das heißt die Stromaufnahme des Motors, der die Werkzeugspindel antreibt, detektiert. Die Masse des Werkstücks 33 wird durch einen Massesensor in der Werkzeugzuführung 19 bestimmt. Alternativ kann dieser Wert auch bereits beim Einstellen eingegeben worden sein.

Ein Fertigungsgeschwindigkeitsprofil P mit den Geschwindigkeits- und Beschleunigungsvorgaben der Bewegungen für die Anfahr- und Bearbeitungsschritte wird in Abhängigkeit des detektierten Motorstroms so angepasst, dass der Motorstrom bei der Bearbeitung in einen vorgegebenen Maximalgrenzbereich Mmax ist. Der Antrieb wird wünschenswerterweise mit maximaler Stromaufnahme betrieben, sodass er an der Lastgrenze arbeitet. Auf diese Weise kann die Bearbeitungsgeschwindigkeit bei wenig Materialabtrag erhöht werden, wogegen sie bei viel Materialabtrag geringer ist. Bei Freifahrbewegungen der Werkstückaufnahme 31 kann die Geschwindigkeit anhand der Werkstückmasse 33 optimiert werden. Alternativ ist die Freifahrgeschwindigkeit vorgegeben und hängt im Wesentlichen von der Maschinenkonstruktion ab. Die Optimierung des Fertigungsgeschwindigkeitsprofils P dient dazu, die Fertigungsdauer zu verkürzen und damit die Produktivität zu steigern. Die Optimierung erfolgt softwaregesteuert anhand der detektierten Maschinenbetriebskenngröße M und nutz die zuvor geschilderten Optimierungspotenziale.

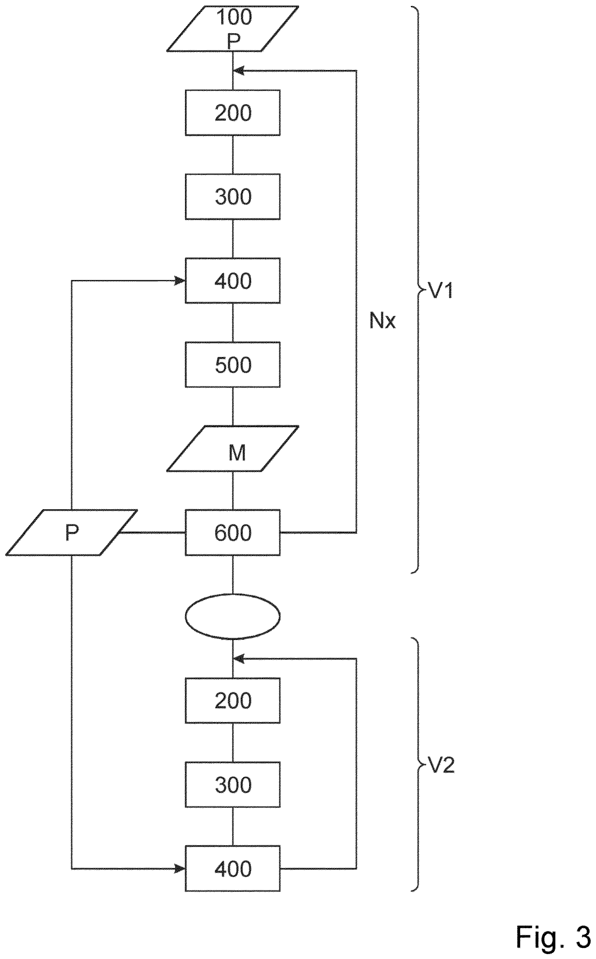

Fig. 3 zeigt eine erstes Ausführungsbeispiel eines Verfahrens zum Betreiben einer Bearbeitungsmaschine 1, bei dem ein Fertigungsgeschwindigkeitsprofil P in einem Einstellbetrieb V1 optimiert wird und das optimierte Fertigungsgeschwindigkeitsprofil P in einem nachfolgenden Fertigungsbetrieb V2 für die Fertigung von Werkstücken 33 eingesetzt wird.

Zunächst wird in einem Eingabeschritt 100 eine Werkzeugbahn mit Soll-Bearbeitungspunkten 43 für die Werkstücke 33 vorgegeben. Dies kann wie zuvor beschrieben erfolgen. Das resultierende Bearbeitungsprogramm mit den Soll-Bearbeitungspunkten 43 und einem vorgegebenen Fertigungsgeschwindigkeitsprofil P wird in der Bearbeitungsmaschine 1 gespeichert. Im Einstellvorgangs V1 sind mehrere Schritte vorgesehen. In einem nächsten Schritt 200 wird ein zu bearbeitendes Werkstück 33 in der Bearbeitungsmaschine 1 bereitgestellt. Das Werkstück 33 ist auf der Werkstückaufnahme 31 eingespannt. Dann erfolgt in einem Schritt 300 eine Lagebestimmung der Soll-Bearbeitungspunkte 43 des Werkstücks 33 vor dem Fertigen. Bei diesem Schritt 300 wird die genaue Ausrichtung des Werkstücks 33 auf der Werkstückaufnahme 31 festgestellt, sodass ein genaues Anfahren der Soll-Bearbeitungspunkte 43 möglich ist. In einem nächsten Fertigungsschritt 400 wird das Werkstück 33 mit der Mehrzahl von Soll-Bearbeitungspunkten 43 gefertigt, wobei das Fertigen Anfahren der Soll-Bearbeitungspunkte 43 und Bearbeiten des Werkstücks 33 an den Soll-Bearbeitungspunkten 43 mit zumindest einem Werkzeug 25 umfasst. Beim Bearbeiten wird über eine Soll-Werkstückform überstehendes Materialvolumen entfernt. Dies kann beispielsweise durch Trennen und/oder Spanen erfolgen. Anfahren und Bearbeiten werden durchgeführt, bis alle Soll-Bearbeitungspunkte 43 bearbeitet worden sind. Während des Fertigungsschritts 400 wird eine belastungsabhängige Maschinenbetriebskenngröße M, beispielsweise der Motorstrom, in einem Schritt 500 erfasst. In einem weiteren Schritt 600 erfolgt ein Anpassen des Fertigungsgeschwindigkeitsprofils P, mit dem eine Abfolge der Anfahrschritte und Bearbeitungsschritte beim Fertigen 400 durchgeführt wird, in Abhängigkeit von der detektierten Maschinenbetriebskenngröße M. Die Anpassung 600 optimiert die Geschwindigkeiten und Beschleunigungen, mit denen die Verfahrbewegungen beim Fertigen 400 durchgeführt werden. Dieses angepasste Fertigungsgeschwindigkeitsprofils P wird für das Fertigen eines weiteren Werkstücks 33 während des Einstellbetriebs V1 verwendet. Die Abfolge von Bereitstellen 200, Lageerfassung 300, Fertigen 400, Erfassen der Maschinenbetriebskenngröße M 500 und Anpassen 600 kann mit weiteren Werkstücken 33 mehrfach wiederholt werden, wobei das Fertigungsgeschwindigkeitsprofil P mit jeder Wiederholung weiter optimiert wird. Die Anzahl der Widerholungsschritte, in Fig. 3 durch "Nx" angedeutet, kann vorgegeben sein oder davon abhängen, wie die Optimierung konvertiert. Bei dieser schrittweisen Optimierung ist zu beachten, dass die Optimierung nicht nur in Abhängigkeit der letzten detektierten Maschinenbetriebskenngröße M des direkt davor gefertigten Werkstück 33 erfolgt, sondern in Abhängigkeit von allen zuvor detektierten Maschinenbetriebskenngrößen M der zuvor gefertigten Werkstücke 33. Dies kann beispielsweise erreicht werden, wenn der Einfluss der detektierten Maschinenbetriebsgröße M auf die Änderung des Fertigungsgeschwindigkeitsprofils P mit jeder Wiederholung abnimmt.

Beim oben beschriebenen Einstellbetrieb V1, auch als Teaching bezeichnet, erfolgt die eigentliche Fertigung in einem Fertigungsbetrieb V2, in dem weitere Werkstücke mit nunmehr unverändert bleibendem angepassten Fertigungsgeschwindigkeitsprofils P gefertigt werden. Der Fertigungsbetrieb V2 umfasst für jedes gefertigte Werkstück 33 die Schritte Bereitstellen 200, Lageerfassung 300 und Fertigen 400.

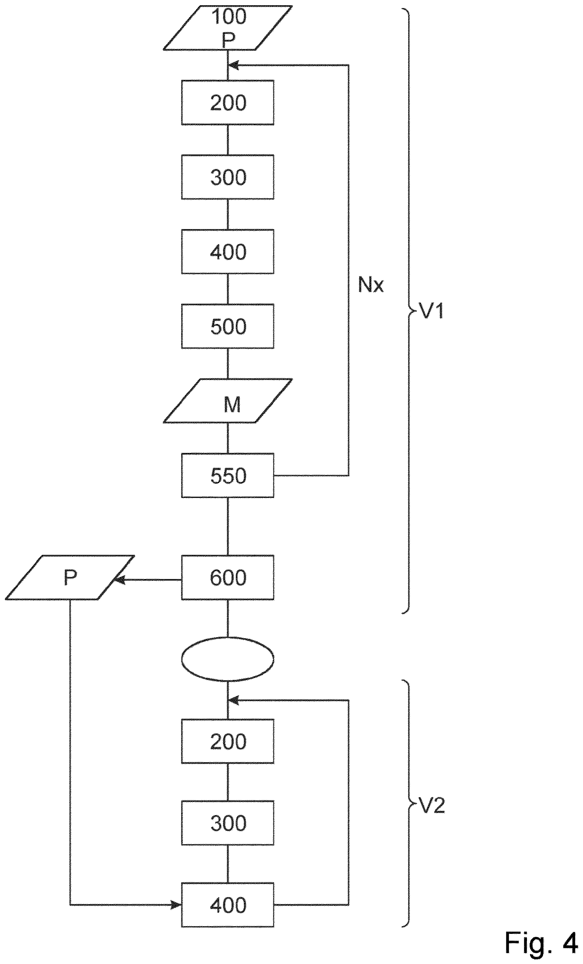

Fig. 4 zeigt ein zweites Ausführungsbeispiel eines Verfahrens zum Betreiben einer Bearbeitungsmaschine, bei dem ein Fertigungsgeschwindigkeitsprofil P in alternativer Weise beim Einstellbetrieb V1 optimiert wird. Um Wiederholungen zu vermeiden, konzentriert sich die Beschreibung auf Unterschiede zum zuvor beschriebenen Verfahren.

Auch bei diesem Verfahren werden mehrere Werkstücke 33 beim Einstellbetrieb V1 bearbeitet. Die Schritte 100, 200, 300 unterscheiden sich nicht. Die Fertigung erfolgt jedoch nicht nur beim ersten Fertigungsschritt 400 während des Einstellbetriebs V1, sondern auch während der weiteren Fertigungsschritte 400 mit weiteren Werkstücken 33 mit demselben vorgegebenen Fertigungsgeschwindigkeitsprofil P, das zunächst nicht verändert wird. Die im Schritt 500 erfassten Maschinenbetriebskenngrößen M werden zunächst für die Fertigung mehrere Werkstücke 33 mit demselben vorgegebenen Fertigungsgeschwindigkeitsprofil P erfasst und gespeichert, angedeutet im Schritt 550. Erst dann wird das Fertigungsgeschwindigkeitsprofil P in Abhängigkeit des ganzen Satzes von erfassten Maschinenbetriebskenngrößen M angepasst und optimiert. Dieses Vorgehen erfasst zunächst den Formenschatz der Werkstücke 33 anhand der Maschinenbetriebskenngrößen M und optimiert das Fertigungsgeschwindigkeitsprofil P erst dann, was mit einer Mittelung der erfassten Maschinenbetriebskenngrößen M einhergeht. Nichtsdestotrotz sind auch Extremwerte zu berücksichtigen, damit das angepasste Fertigungsgeschwindigkeitsprofil P für den ganzen Formenschatz passt.

Die zuvor beschriebenen Verfahren lassen sich auch Kombinieren, indem das Fertigungsgeschwindigkeitsprofil P nicht nach jedem Fertigungsschritt 400 angepasst wird, sondern erst die Maschinenbetriebskenngrößen M mehrerer Fertigungsschritte 400 mit mehreren Werkstücken 33 erfasst werden und danach erfolgt ein Anpassungsschritt 600. Dann werden wieder die Maschinenbetriebskenngrößen M mehrerer Fertigungsschritte 400 mit mehreren Werkstücken 33 mit nun angepasstem Fertigungsgeschwindigkeitsprofil P erfasst und danach erfolgt ein Anpassungsschritt 600. Dies kann mehrfach wiederholt werden.

Nach dem oben beschriebenen Einstellbetrieb V1 erfolgt die eigentliche Fertigung in einem Fertigungsbetrieb V2, in dem weitere Werkstücke 33 mit nunmehr unverändert bleibendem angepassten Fertigungsgeschwindigkeitsprofils P gefertigt werden.

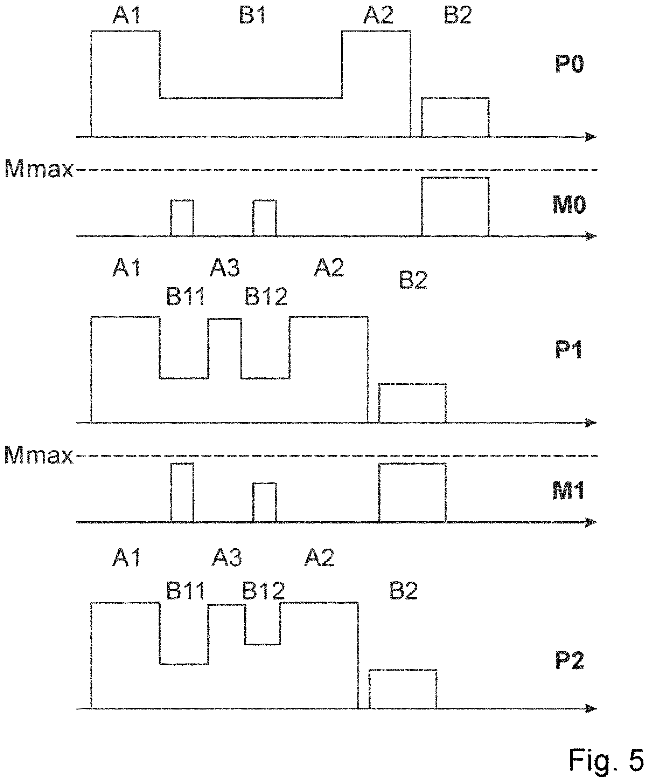

Fig. 5 veranschaulicht Optimierungsansätze bei einer schrittweisen Optimierung, wie in Zusammenhang mit Fig. 3 erläutert, anhand skizzierter, vereinfachter Fertigungsgeschwindigkeitsprofile P0, P1, P2.

Die Anpassung erfolgt nach der Fertigung mit einem vorgegebenen Fertigungsbewegungsprofil P0. Das Fertigungsbewegungsprofil P0 umfasst Anfahrbewegungen A1, A2 und Bearbeitungsbewegungen B1, B2. Deren Geschwindigkeiten über der Zeit sind im Fertigungsbewegungsprofil P0 dargestellt. Die Bewegungsabfolge mit der Anfahrbewegung A1, der langsameren Bearbeitungsbewegung B1 und der Anfahrbewegung A2 wird durch die Werkstückaufnahme 31 ausgeführt. Die Bearbeitungsbewegung B2 wird vom Werkzeug 25 ausgeführt, was durch einen anderen Linientyp angedeutet ist. Die Anfahrbewegungen A1, A2 werden mit derselben Geschwindigkeit ausgeführt, die größer ist als die Geschwindigkeit der Bearbeitungsbewegungen B1, B2. Die beiden Geschwindigkeiten sind in diesem Ausführungsbeispiel vorgegeben.

Während der Fertigung wird eine Motorstromaufnahme als Maschinenbetriebsgröße M0 erfasst, deren zeitabhängiger Verlauf in Fig. 5 dargestellt ist. Der Motorstrom steigt bei Materialabtrag an. Während der Bearbeitungsbewegung B1 kommt es zu zwei kurzzeitigen Anstiegen, was mit räumlich begrenzten Materialabträgen zweier Materialvolumina einhergeht. Während der Bearbeitungsbewegung B2 kommt es zu einem stärkeren Materialabtrag während des gesamten Bearbeitungszeitraums, angezeigt durch einen starken Anstieg des Maschinenstroms bereits nahe des Lastgrenzbereichs Mmax.

Basierend auf der detektierten Motorstromaufnahme als Maschinenbetriebsgröße M0 wird das Fertigungsbewegungsprofil P0 angepasst. Das angepasste Fertigungsbewegungsprofil P1 ist ebenfalls in Fig. 5 dargestellt.

Die Phase zwischen den beiden Materialabträgen während der Bearbeitungsbewegung B1 ist als Freifahrbewegung detektiert worden und wird nun als Anfahrbewegung A3 eingestuft, sodass die Werkstückaufnahme 31 in dieser Zeit mit erhöhter Geschwindigkeit bewegt wird. Gleiches gilt für den Endbereich der Bearbeitungsbewegung B1, in der keine Bearbeitung mehr erfolgt ist. Diese Bewegungsphase ist als Freifahrbewegung der Anfahrbewegung A2 zugeordnet worden. Dadurch ist die vorherige Bearbeitungsbewegung B1 in zwei Bearbeitungsbewegungen B11 und B12 gesplittet worden, die beide mit einer höheren Bearbeitungsgeschwindigkeit durchgeführt werden als zuvor die Bearbeitungsbewegung B1, um den Motorstrom näher an den Lastgrenzbereich Mmax zu bringen. Durch die höheren Geschwindigkeiten verringert sich die Fertigungsdauer, erkennbar an der geringeren Breite des Fertigungsbewegungsprofils P1 und daran, dass die Bewegungsphasen nun kürzer sind. Die Geschwindigkeit der Bearbeitungsbewegung B2 wurde nicht verändert, da der Motorstrom bereits nahe am Lastgrenzbereich Mmax gewesen ist.

Die Anpassung des Fertigungsbewegungsprofils erfolgt bei den ersten Optimierungsschritten üblicherweise so, dass die resultierende Maschinenbetriebskenngröße M bei einem gleichen Werkstück einen Sicherheitspuffer zum Lastgrenzbereich Mmax haben würde. Dies ist eine Vorsichtsmaßnahme, da der Formenschatz der Werkstücke 33 gerade am Anfang des Einstellbetriebs manchmal schwer abschätzbar ist.

Das Fertigen eines weiteren Werkstücks 33 erfolgt mit dem angepassten Fertigungsbewegungsprofil P1. Die dann detektierte Motorstromaufnahme als Maschinenbetriebsgröße M1 zeigt zwei Anstiege unterschiedlicher Höhe bei den Bearbeitungsbewegungen B11 und B12, was unterschiedlich starken Materialabtrag anzeigt. Während der Bearbeitungsbewegung B2 kommt es zu einem starken Materialabtrag während des gesamten Bearbeitungszeitraums, der bereits nahe des Lastgrenzbereichs Mmax ist, was anzeigt, dass die Optimierung für diesen Abschnitt bereits passt.

Basierend auf der detektierten Motorstromaufnahme als Maschinenbetriebsgröße M1 wird das Fertigungsbewegungsprofil P1 weiter angepasst. Das angepasste Fertigungsbewegungsprofil P2 ist ebenfalls in Fig. 5 dargestellt. Bei dieser schrittweisen Optimierung ist zu beachten, dass die Optierung nicht nur in Abhängigkeit der letzten detektierten Maschinenbetriebskenngröße M1 des zuvor gefertigten Werkstück 33 erfolgt, sondern in Abhängigkeit von allen zuvor detektierten Maschinenbetriebskenngrößen M0, M1 der zuvor gefertigten Werkstücke 33. Die unterschiedliche Höhe der Anstiege der Motorstromaufnahme M1 bei den Bearbeitungsbewegungen B11 und B12 lässt auf unterschiedlich großen Materialabtrag schließen. Die Bearbeitungsgeschwindigkeiten für die Bewegungen B11 und B12 werden entsprechend angepasst. Der geringere der beiden Motorstromanstiege während der Bearbeitungsbewegung B12 führt zu einer größeren Geschwindigkeit und einer kürzeren Bearbeitungszeit im weiter angepassten Fertigungsgeschwindigkeitsprofil P2.

Exemplarisch sind nur zwei Optimierungsschritte dargestellt worden. Üblicherweise werden beim Einstellvorgang aber noch mehr Optimierungsschritte mit weiteren Werkstücken 33 durchgeführt.

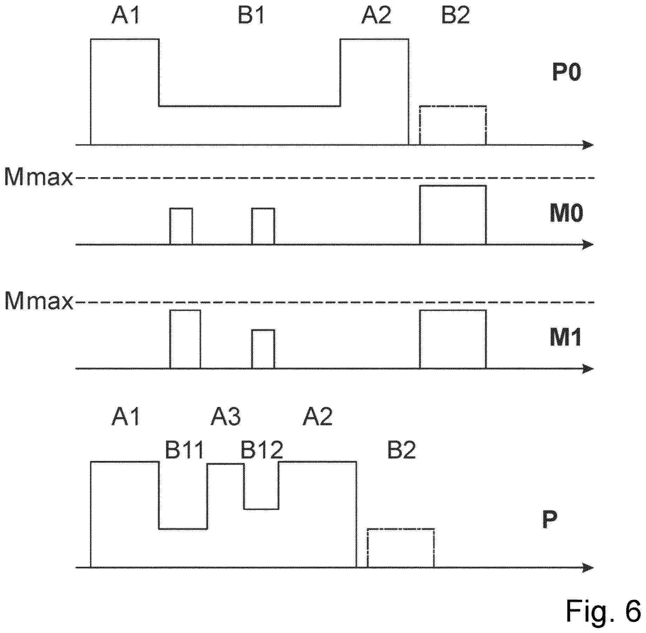

Fig. 6 veranschaulicht Optimierungsansätze für ein vorgegebenes Fertigungsgeschwindigkeitsprofil P0 bei einer Anpassung basierend auf einem Satz detektierter und gespeicherter Motorstromaufnahmen als Maschinenbetriebsgrößen M0, M1, wie in Zusammenhang mit Fig. 4 erläutert.

Die Anpassung erfolgt nach mehreren, hier beispielhaft zwei, Fertigungen von mehreren Werkstücken 33 mit demselben vorgegebenen Fertigungsbewegungsprofil P0, das mit dem aus Fig. 5 übereinstimmt.

Es werden bei den Fertigungsschritten die Motorströme als Maschinenbetriebskenngrößen M0, M1 für die Fertigung zweier Werkstücke 33 detektiert. Die Anpassung erfolgt anschließend basierend auf allen detektierten Maschinenbetriebskenngrößen M0, M1. Auch bei dieser Optimierung werden die in Zusammenhang mit Fig. 5 bereits beschriebenen Optimierungsansätze verfolgt, die zu einem gleichen oder ähnlichem Fertigungsbewegungsprofil P wie das Fertigungsbewegungsprofil P2 aus Fig. 5 führen. Üblicherweise umfasst der Satz von detektierten Maschinenbetriebskenngrößen mehr als zwei detektierte Maschinenbetriebskenngrößen.

Die Beispiele in Fig. 5 und Fig. 6 sind sehr stark vereinfacht. Weitere Optimierungsansätze, wie zuvor beschrieben, können in die Anpassung des Fertigungsbewegungsprofils einfließen. Die Optimierung verbessert sich mit der Anzahl der gefertigten Werkstücke 33. Die Beschleunigungen können basierend auf den beschriebenen Optimierungsansätzen ebenfalls angepasst werden. Auch die Masse des Werkstücks 33 kann in die Optimierung einfließen. Neben der Geschwindigkeiten und der Beschleunigungen können auch die Wege und Bewegungsabfolgen zwischen den Soll-Bearbeitungspunkten 43 und deren Reihenfolge optimiert werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

### Bezugszeichen

- 1: Bearbeitungsmaschine
- 3: Bearbeitungskammer
- 5: Rüstbereich
- 7: Tür
- 9: Steuervorrichtung
- 11: Bildschirm
- 13: Bedientaste
- 15: Starttaster
- 17: Notaustaster
- 19: Werkstückzuführung
- 25: Werkzeug
- 27: Messvorrichtung
- 29: Arm
- 31: Werkstückaufnahme
- 33: Werkstück
- 35: Spannelement
- 37: Drehtisch
- 39: Werkzeugzuführung
- 41: Maschinenbetriebskenngrößensensor
- 43: Soll-Bearbeitungspunkt
- M, M0, M1: Maschinenbetriebskenngröße
- P, P0, P1, P2: Fertigungsgeschwindigkeitsprofil
- V1: Einstellbetrieb
- V2: Fertigungsbetrieb
- 100, 200, 300, 400, 500, 550, 600: Verfahrensschritte

## Patentansprüche

1. Verfahren zum Einstellen einer Bearbeitungsmaschine (1) zum automatischen Bearbeiten, insbesondere Abtrennen von Materialvolumen, eines Werkstücks (33) durch ein maschinengesteuertes Werkzeug (25) der Bearbeitungsmaschine (1) mit den Schritten:
- Fertigen (400) eines Werkstücks (55) mit einer Mehrzahl von Soll-Bearbeitungspunkten (43) zum Bearbeiten, wobei das Fertigen Anfahren der Soll-Bearbeitungspunkte (43) und Bearbeiten des Werkstücks (33) an den Soll-Bearbeitungspunkten (43) mit zumindest einem Werkzeug (25) umfasst,
- Erfassen (500) einer belastungsabhängigen Maschinenbetriebskenngröße (M) beim Fertigen,
- Anpassen (600) eines Fertigungsgeschwindigkeitsprofils (P), mit dem eine Abfolge von Anfahrschritten und Bearbeitungsschritten beim Fertigen durchgeführt wird, in Abhängigkeit von der ermittelten Maschinenbetriebskenngröße (M) für das Fertigen eines weiteren Werkstücks (33).

2. Verfahren nach Anspruch 1,
wobei das Fertigen (400), Erfassen (500) und Anpassen (600) jeweils mit mehreren Werkstücken (33) durchgeführt werden, um das Fertigungsgeschwindigkeitsprofil (P) schrittweise zu optimieren,
oder wobei das Fertigen (400) und Erfassen (500) jeweils mit mehreren Werkstücken (33) durchgeführt werden, um eine Mehrzahl von Maschinenbetriebskenngrößen (M) zu erfassen, und dann wird das Fertigungsgeschwindigkeitsprofil (P) in Abhängigkeit von der Mehrzahl von Maschinenbetriebskenngrößen (M) angepasst.

3. Verfahren nach Anspruch 1 oder 2,
umfassend eine Lagebestimmung der Soll-Bearbeitungspunkte (43) des Werkstücks (33) vor dem Fertigen (400).

4. Verfahren nach einem der vorherigen Ansprüche,
wobei beim Fertigen (400) eine Werkstückaufnahme (31), auf der das Werkstück (33) eingespannt ist, mit dem Werkstück (33) und/oder das zumindest eine Werkzeug (25) bewegt werden,
und wobei eine Bewegungsabfolge beim Fertigen (400) Anfahrabschnitte umfasst, in denen kein Bearbeiten vorgesehen ist, und Bearbeitungsabschnitte umfasst, in denen Bearbeiten vorgesehen ist oder sein kann,
und wobei das Fertigungsgeschwindigkeitsprofil (P) für die Bewegungsabfolge beim Fertigen (400) im Anpassungsschritt (600) zumindest abschnittsweise oder für Gruppen von Abschnitten optimiert wird.

5. Verfahren nach Anspruch 4,
wobei das Anpassen (600) umfasst, eine Zuordnung zu Anfahrabschnitten oder Bearbeitungsabschnitten innerhalb der Bewegungsabfolge zu verändern.

6. Verfahren nach Anspruch 4 oder 5,
wobei die Bewegungen innerhalb eines Anfahrabschnitts oder eines Bearbeitungsabschnitts in mehrere Teilabschnitte unterteilt werden, die teilabschnittsweise optimiert werden.

7. Verfahren nach einem der vorherigen Ansprüche,
wobei das Fertigungsgeschwindigkeitsprofil (P) von einem abzutragenden Materialvolumen abhängt.

8. Verfahren nach einem der vorherigen Ansprüche,
wobei die Maschinenbetriebskenngröße (M) eine Antriebskenngröße des zumindest einen Werkzeugs (33), insbesondere ein Motorstrom, ist, und die Anpassung (600) so erfolgt, dass der Antrieb in einem vorgegebenen Lastgrenzbereich (Mmax) betrieben wird.

9. Verfahren nach einem der vorherigen Ansprüche 4 bis 8,
wobei eine Geschwindigkeit und/oder eine Beschleunigung, mit der das Werkstück (33) bewegt wird, von dessen Masse abhängt.

10. Verfahren nach einem der vorherigen Ansprüche,
wobei eine Werkzeugbahn mit den Soll-Bearbeitungspunkten (43) zum Bearbeiten erfasst wird, indem die durch eine Mensch-Maschine-Schnittstelle angesteuerten Soll-Bearbeitungspunkte (43) erfasst werden.

11. Verfahren nach einem der vorherigen Ansprüche,
wobei in einem Einstellbetrieb (V1) das Fertigungsgeschwindigkeitsprofil (P) angepasst wird und in einem anschließenden Fertigungsbetrieb (V2) das Fertigen (400) von weiteren Werkstücken (33) mit dem angepasstem Fertigungsgeschwindigkeitsprofil (P) erfolgt, ohne dass das Fertigungsgeschwindigkeitsprofil (P) weiter angepasst wird.

12. Computerprogrammprodukt umfassend Befehle in einem Programm, die bei einer Ausführung des Programms durch einen Computer diesen veranlassen, das Verfahren nach einem der vorhergehenden Ansprüche mit einer Bearbeitungsmaschine (1) auszuführen.

13. Bearbeitungsmaschine (1) zum automatischen Bearbeiten, insbesondere Abtragen von Materialvolumen, eines Werkstücks (33) durch ein maschinengesteuertes Werkzeug (25) umfassend:
- eine bewegliche Werkstückaufnahme (31), auf der ein zu bearbeitendes Werkstück (33) einspannbar ist,
- zumindest ein bewegliches maschinengesteuertes Werkzeug (25),
- einen Maschinenbetriebskenngrößensensor (41), der ausgebildet ist, eine belastungsabhängige Maschinenbetriebskenngröße (M) zu erfassen,
- eine Speichervorrichtung, in der eine Mehrzahl von Soll-Bearbeitungspunkten (43) zum Bearbeiten speicherbar ist und in der ein Fertigungsgeschwindigkeitsprofils (P), mit dem eine Abfolge von Anfahrschritten und Bearbeitungsschritten beim Fertigen (400) durchgeführt wird, speicherbar ist,
- eine Steuervorrichtung (9), die mit der Speichervorrichtung und dem Maschinenbetriebskenngrößensensor (41) gekoppelt ist und die ausgebildet ist, die Bewegung des Werkzeugs (25) und/oder der Werkstückaufnahme (31) so zu steuern, dass zur Bearbeitung des Werkstücks (33) die Soll-Bearbeitungspunkte (43) angefahren werden und das Werkstück (33) an den Soll-Bearbeitungspunkten (43) mit dem zumindest einen Werkzeug (25) bearbeitet wird, wobei die Maschinenbetriebskenngröße (M) beim Fertigen (400) erfasst wird, und das Fertigungsgeschwindigkeitsprofil (P) anzupassen und zu speichern.

14. Bearbeitungsmaschine (1) nach Anspruch 13,
die ausgebildet ist, die Schritte des Verfahrens nach einem der Ansprüche 1 bis 11 auszuführen.
